# EUROPÄISCHE PATENTSCHRIFT

(11) **EP 3 943 441 B1**
(45) Veröffentlichungstag und Bekanntmachung des Hinweises auf die Patenterteilung: **01.01.2025**
(21) Anmeldenummer: 21186763.5
(22) Anmeldetag: 20.07.2021
(51) Int. Cl.: B66F 9/06, B25J 5/00, B25J 9/00, B25J 15/00, B66F 9/18

(54) **AUTONOMER MOBILER ROBOTER ZUR AUFNAHME, ZUM TRANSPORT UND ZUM ABSETZEN VON LADUNGSTRÄGERN**
AUTONOMOUS MOBILE ROBOT FOR RECEIVING, TRANSPORTING AND DEPOSITING LOAD CARRIERS
ROBOT MOBILE AUTONOME PERMETTANT DE RECEVOIR, DE TRANSPORTER ET POSER DES PORTE-CHARGES

(30) Priorität: 21.07.2020 DE 202020104206 U; 03.08.2020 DE 202020104473 U; 30.04.2021 DE 202021102343 U
(43) Veröffentlichungstag der Anmeldung: 26.01.2022
(73) Patentinhaber: MartinMechanic Friedrich Martin GmbH & Co. KG, 72202 Nagold (DE)
(72) Erfinder: Martin, Claus, 72202 Nagold (DE); Martin, Frank, 72202 Nagold (DE)
(74) Vertreter: Witte, Weller & Partner Patentanwälte mbB

(56) Entgegenhaltungen:
- JP-A- 2009 196 381
- US-A1- 2020 102 164

## Beschreibung

Die Erfindung betrifft einen autonomen mobilen Roboter (AMR), der zum Aufnehmen, Abstellen und Transportieren von Ladungsträgern ausgebildet ist und wenigstens ein Fahrgestell von zumindest näherungsweise rechteckförmiger Basisgestalt mit einer Vorzugslängsachse und einer Vorzugsquerachse umfasst, wobei die Vorzugslängsachse und die Vorzugsquerachse eine Fahrgestellebene aufspannen, mit einem Fahrwerk, einem Antrieb, einer Steuerung und mit wenigstens einer Ladungsträgeraufnahmeeinrichtung, die zum Greifen wenigstens eines Ladungsträgers, zum Anheben des Ladungsträgers von einem Boden und/oder zum Absenken bzw. zum Abstellen des Ladungsträgers auf einem Boden in einem Bereich und/oder an einer Stelle in der Umgebung des Fahrgestells sowie zum Tragen des wenigstens einen Ladungsträgers in einer Position vollständig über dem Fahrgestell und/oder zum Abstellen des wenigstens einen Ladungsträgers auf dem Fahrgestell und/oder zum Anheben des wenigstens eines Ladungsträgers vom Fahrgestell ausgebildet ist.

Aus der US 2020/102164 A1 ist eine Vorrichtung in Form eines autonomen mobilen Roboters gemäß dem Oberbegriff des Anspruchs 1 bekannt. Die Vorrichtung weist eine Handhabungseinheit mit zwei einander gegenüberliegenden, gekrümmten Greifern auf, die zwischen sich Objekte mit etwa kreisförmigem Querschnitt greifen können. Ferner ist eine in die Vorrichtung integrierte drehbare scheibenförmige Plattform vorgesehen, auf der die Handhabungseinheit Objekte ablegen kann.

Unter einem autonomen mobilen Roboter wird gemeinhin ein Roboter verstanden, der sich in einer bestimmten Umgebung selbstständig bewegen und agieren kann. Die Art des Terrains bestimmt hierbei die notwendigen Aktoren zur Fortbewegung.

Während sich beispielsweise ein Fahrwerk mit Rädern, Rollen oder dergleichen für eher ebenes Gelände eignet, sind für unebenes Gelände meist Ketten oder Beine von Vorteil. Zudem sind die einen autonomen mobilen Roboter steuernde Elektronik, Hardware und/oder Software sowie Sensoren zur Erfassung der Umgebung ein essenzielles Element eines jeden autonomen mobilen Roboters. Die jeweilige Ausbildung und das Zusammenspiel der vorstehend genannten Elemente bestimmen wesentlich den Grad der Selbstständigkeit eines autonomen mobilen Roboters. Eine grundsätzliche Limitierung der Autonomie eines autonomen mobilen Roboters begründet sich in seiner Energieversorgung und des typischerweise endlichen Energievorrats eines autonomen mobilen Roboters, der nach einer gewissen autonomen Operationszeit wieder aufgefüllt werden muss. Vorgaben im Hinblick auf die zu erledigenden Aufgaben und gegebenenfalls wie diese Aufgaben zu erledigen sind bedeuten hingegen keine wesentliche Einschränkung der Autonomie eines autonomen mobilen Roboters.

Als Ladungsträger werden allgemein Mittel zur Zusammenfassung von Gütern, Packstücken oder dergleichen zu einer Ladeeinheit verstanden, d. h., zu einer physischen Transporteinheit, bestehend etwa aus einem Ladehilfsmittel wie einer Palette, Ladeeinheitensicherungsmitteln oder Ladegutsicherungsmitteln und dem Packstück oder Ladegut. Im Rahmen dieser Erfindung werden unter einem Ladungsträger insbesondere, aber nicht ausschließlich, Transportpaletten sowie Gitterboxen, gegebenenfalls jeweils mit wenigstens einem Packstück, Ladegut oder dergleichen und Kleinladungsträger verstanden. Bei Kleinladungsträgern handelt es sich dabei um (standardisierte) Transport- und Lagerkisten. Zudem schließt der Begriff des Ladungsträgers auch Pakete, Päckchen, Packstücke oder dergleichen und Gebinde von Paketen, Päckchen, Packstücken oder dergleichen ein.

Autonome mobile Roboter sind in Form autonomer Flurfördergeräte, fahrerloser Transportsysteme oder dergleichen im Bereich der hoch automatisierten Produktion oder auch der hoch automatisierten Lagerhaltung in vielfältigen Ausgestaltungen bekannt. In der hoch automatisierten Produktion werden autonome mobile Roboter etwa eingesetzt, um Werkstücke zwischen verschiedenen Fertigungsstationen oder Bearbeitungsstationen zu transportieren. Aus der hoch automatisierten Lagerhaltung sind zahlreiche autonome mobile Roboter bekannt, die bekannten Ausführungen von Gabelstaplern oder Hubstaplern ähneln. Gabel- oder Hubstapler sind dabei in besonderem Maße dafür ausgelegt, Ladungsträger direkt von einem Boden aus aufzunehmen. Die typischen Gabelträger der Gabel- oder Hubstapler, vor allen Dingen die permanente und sehr exponierte Anordnung der Gabelträger in einem Bereich vor einer Längs- oder Querseite des Fahrgestells eines Gabel- oder Hubstaplers, stellen allerdings, insbesondere bei einem automatischen/automatisierten Betrieb von autonomen mobilen Robotern mit derartigen Gabelträgern, immer noch eine nicht unerhebliche Gefahr für Personen dar, die sich im Operationsbereich eines derartigen autonomen mobilen Roboters aufhalten. Zudem haben die Gabelträger einen nicht unerheblichen Platzbedarf, der etwa beim Manövrieren oder Rangieren nachteilig ist.

Der vorliegenden Erfindung liegt daher die Aufgabe zugrunde, einen kompakten autonomen mobilen Roboter zum Transport von wenigstens einem Ladungsträger zu schaffen, der Ladungsträger insbesondere von einem Boden aufnehmen und insbesondere auf einen Boden wieder absetzen kann und dabei eine deutliche verbesserte Betriebssicherheit und Funktionalität gegenüber den aus dem Stand der Technik bekannten Lösungen aufweist.

Diese Aufgabe wird erfindungsgemäß durch einen autonomen mobilen Roboter nach Anspruch 1 gelöst. Weitere vorteilhafte Ausgestaltungen sind den rückbezogenen Schutzansprüchen zu entnehmen.

Demnach umfasst die Ladungsträgeraufnahmeeinrichtung eines erfindungsgemä-βen autonomen mobilen Roboters zwei, in bezüglich des Fahrgestells gegenüberliegenden längsseitigen Bereichen in einer Umgebung eines der beiden längsseitigen Enden des Fahrgestells angeordnete, wenigstens in einer Ebene senkrecht zu der Fahrgestellebene um eine zu der Vorzugsquerachse parallele Armdrehachse schwenkbare bzw. drehbare Arme, wobei die Ladungsträgeraufnahmeeinrichtung zum stirnseitigen Greifen des Ladungsträgers ausgebildet ist und nach Aufnehmen eines Ladungsträgers an einer Aufnahmeposition zum Verbringen des Ladungsträgers in eine Position vollständig über dem Fahrgestell und/oder zum Verbringen eines Ladungsträgers aus einer Position vollständig über dem Fahrgestell in eine Abstellposition mittels der Ladungsträgeraufnahmeeinrichtung der Ladungsträger durch eine Vertikalebene, die senkrecht zu der Fahrgestellebene ausgerichtet ist und wobei die Armdrehachse in dieser Vertikalebene verläuft, vollständig hindurchtritt.

Alle Achsen im Rahmen der vorliegenden Erfindung sind primär als virtuelle mathematisch-geometrische Hilfskonstruktionen und nicht etwa als Maschinenelement oder dergleichen im Sinne eines Bauteils eines erfindungsgemäßen autonomen mobilen Roboters zu verstehen, was allerdings keinesfalls ausschließen soll, dass sich etwa ein oder auch mehrere Maschinenelemente zumindest ein Stück weit entlang einer dieser Achsen erstrecken und/oder einer dieser Achsen zugeordnet sein können.

Im Rahmen der vorliegenden Erfindung wird ein Fahrgestell nicht nur als eine Art von tragender Rahmenkonstruktion oder dergleichen verstanden, die Antrieb, Aufbauten bzw. eine Karosserie und gegebenenfalls Nutzlast (einen oder mehrere Ladungsträger) trägt. Das Fahrgestell kann auch Aufbauten bzw. eine Karosserie oder zumindest Teile davon umfassen. In diesem Sinne wird der Begriff des Fahrgestells synonym zu dem aus der Automobilindustrie insbesondere für Personenkraftwagen bekannten Begriff der selbsttragenden Karosserie verwendet, der (eine Kombination von) Fahrgestell und Aufbau(ten) umfasst. Es ist vorgesehen, dass ein erfindungsgemäßer autonomer mobiler Roboter ein Fahrgestell von näherungsweise rechteckförmiger Basisgestalt aufweist, sodass sich gewissermaßen auf natürliche Art und Weise aus dieser Basisgestalt sowohl eine Vorzugsquerachse als auch eine Vorzugslängsachse des Fahrgestells ergibt, die orthogonal zueinander sind und eine Fahrgestellebene aufspannen. Ohne Beschränkung der Allgemeinheit wird dabei zusätzlich vorausgesetzt, dass die maximale Erstreckung des Fahrgestells entlang der Vorzugsquerachse, also die Längserstreckung des Fahrgestells, mindestens genauso groß, typischerweise größer, als die maximale Erstreckung des Fahrgestells entlang der Vorzugsquerachse, also die Querstreckung des Fahrgestells, ist. Das Fahrgestell weist dann zwei längsseitige Enden, die zugleich die beiden entlang der Vorzugslängsachse gegenüberliegenden Querseiten bilden, und zwei Längsseiten auf, die sich gegenüberliegend zwischen den beiden Querseiten erstrecken und die gegenüberliegenden Enden des Fahrgestells entlang der Vorzugsquerachse darstellen.

Regelmäßig, aber ohne Beschränkung der Allgemeinheit, ist ein Boden, von dem ein erfindungsgemäßer autonomer mobiler Roboter Ladungsträger aufnimmt und/oder ein Boden, auf dem ein solcher Roboter Ladungsträger abstellt, nur leicht uneben und zudem auch in der Regel auch nur geringfügig (wenige Grad) gegenüber einer horizontalen Ebene geneigt. Dies entspricht der Situation, wie sie üblicherweise etwa in Produktions- und/oder Lagerhallen oder allgemeiner auf Betriebsgeländen vorliegt. Ein erfindungsgemäßer Roboter ist insbesondere sowohl zum Aufnehmen von einem oder mehreren Ladungsträgern von einem solchen Boden als auch zum (Wieder-)Abstellen eines oder mehrere Ladungsträger auf einem solchen Boden ausgebildet. Dabei befindet und/oder bewegt sich ein entsprechender autonomer mobiler Roboter in einer Umgebung einer Aufnahmeposition oder einer Abstellposition auf dem gleichen Boden, von dem ein oder mehrere Ladungsträger aufgenommen bzw. aufgeladen werden oder alternativ ein oder mehrere zu irgendeinem beliebigen vorhergehenden Zeitpunkt von dem autonomen mobilen Roboter bereits aufgenommene Ladungsträger (wieder) abgestellt bzw. (wieder) abgeladen werden sollen. Ein erfindungsgemäßer Roboter ist in dieser Hinsicht jedoch keinesfalls eingeschränkt. Es ist auch möglich, dass ein erfindungsgemäßer autonomer mobiler Roboter einen oder mehrere Ladungsträger an einer Aufnahmeposition aufnimmt bzw. auflädt und/oder an einer Abstellposition abstellt bzw. ablädt, wobei sich der autonome mobile Roboter in keiner Umgebung um die Aufnahmeposition und/oder Abstellposition auf einem gemeinsamen Boden mit der Aufnahmeposition und/oder der Abstellposition befindet und/oder bewegt. Die Aufnahmeposition und/oder die Abstellposition kann sich dann etwa auf einem Sockel, einem Regalboden oder auf einer Ladefläche eines anderen Fahrzeugs befinden, um nur einige Beispiele zu nennen. Grundsätzlich ist jede Position, an der von einem erfindungsgemäßen autonomen mobilen Roboter zumindest ein Ladungsträger aufgenommen bzw. aufgeladen und/oder zumindest ein Ladungsträger abgestellt bzw. abgeladen werden kann, eine mögliche Aufnahmeposition und/oder eine mögliche Abstellposition. Es ist auch möglich, dass ein erfindungsgemäßer autonomer mobiler Roboter Ladungsträger sich nicht zwingend selbsttätig, also mittels der jeweiligen eigenen Ladungsträgeraufnahmeeinrichtung, belädt und/oder entlädt, sondern gegebenenfalls alternativ auch eine Beladung und/oder Entladung auf irgendeine andere Art und Weise vorgesehen sein kann.

Eine Ladungsträgeraufnahmeeinrichtung eines erfindungsgemäßen autonomen mobilen Roboters ist zur Aufnahme sowie zum anschließendem sicheren Halten und Tragen zumindest eines Ladungsträgers ausgebildet und weist hierzu Mittel zum (lösbaren) Greifen zumindest eines Ladungsträgers, insbesondere zum Angreifen an zumindest einem Ladungsträger und/oder zum Eingreifen in zumindest einem Ladungsträger auf. Ein Ladungsträger, an dem eine Ladungsträgeraufnahmeeinrichtung eines erfindungsgemäßen autonomen mobilen Roboters eingreift, weist dabei zumindest einen Freiraum, eine Ausnehmung, eine Aussparung oder dergleichen an einer Außenseite auf, sodass die Mittel zum (Ein-)Greifen von au-βen in diesen zumindest einen Freiraum, eine Ausnehmung, eine Aussparung oder dergleichen hinein und in Eingriff gebracht und der Ladungsträger derart von der Ladungsträgeraufnahmeeinrichtung aufgenommen wird. Zum Freigeben eines zu irgendeinem vorherigen Zeitpunkt von der Ladungsträgeraufnahmeeinrichtung bereits aufgenommenen Ladungsträgers werden die Mittel zum (Ein-)Greifen mit dem zumindest einen Freiraum, der zumindest einen Ausnehmung, der zumindest einen Aussparung oder dergleichen außer Eingriff gebracht. Weist ein Ladungsträger keine Freiräume, Ausnehmungen, Aussparungen oder dergleichen auf, so greift die Ladungsträgeraufnahmeeinrichtung mit ihren Mitteln zum Greifen bei der Aufnahme eines derartigen Ladungsträgers nur außenseitig an einem solchen Ladungsträger an. Ein derartiger Ladungsträger kann außenseitige Anformungen, Auskragungen oder dergleichen aufweisen, um ein (An-)Greifen und Aufnehmen eines solchen Ladungsträgers zu erleichtern, wobei die Mittel zum Greifen der Ladungsträgeraufnahmeeinrichtung entsprechend korrespondierend zu den Anformungen, Auskragungen oder dergleichen ausgebildet sind.

Aufgrund der Vielzahl an verschieden ausgestalteten Ladungsträgern ist es gegebenenfalls zweckmäßig, für verschiedene Arten von Ladungsträgern unterschiedliche Mittel zum Greifen der verschiedenen Arten von Ladungsträgern vorzusehen. Vorzugsweise sind die Mittel zum Greifen von einem oder mehreren Ladungsträgern einer Ladungsträgeraufnahmeeinrichtung eines erfindungsgemäßen autonomen mobilen Roboters daher leicht austauschbar ausgestaltet. Präferiert sind zumindest die schwenkbaren bzw. drehbaren Arme einer Ladungsträgeraufnahmeeinrichtung eines erfindungsgemäßen autonomen mobilen Roboters symmetrisch (zueinander), also etwa spiegelbildlich bezüglich der Vorzugslängsachse bzw. bezüglich einer Ebene senkrecht zu der Fahrgestellebene des Fahrgestells, die die Fahrgestellebene gerade entlang der Vorzugslängsachse schneidet, ausgebildet. Begünstigter Weise ist eine Ladungsträgeraufnahmeeinrichtung eines derartigen autonomen mobilen Roboters als Ganzes symmetrisch, also etwa spiegelbildlich bezüglich der Vorzugslängsachse bzw. bezüglich einer Ebene senkrecht zu der Fahrgestellebene des Fahrgestells, die die Fahrgestellebene gerade entlang der Vorzugslängsachse schneidet, ausgebildet. Des Weiteren werden Ausgestaltungen eines erfindungsgemäßen autonomen mobilen Roboters favorisiert, bei denen die schwenkbaren bzw. drehbaren Arme der Ladungsträgeraufnahmeeinrichtung zusammenwirken, miteinander synchronisiert sind oder dergleichen.

Sofern vorgesehen ist, dass der oder die von einem erfindungsgemäßen autonomen mobilen Roboter zu Transport aufgenommenen Ladungsträger auf dem Fahrgestell des autonomen mobilen Roboters abgesetzt werden können, kann der autonome mobile Roboter zumindest eine Ladefläche, auf der der oder die Ladungsträger zumindest während des Transports abgesetzt werden können, aufweisen. Die Ladefläche ist dabei vorzugsweise an einer Oberseite des Fahrgestells angeordnet. Die Ladefläche kann integraler Bestandteil des Fahrgestells sein oder die Ladefläche kann ein zusätzliches Element bzw. Teil eines zusätzlichen Elements, einer zusätzlichen Einrichtung, einer zusätzlichen Vorrichtung oder dergleichen wie ein Ladungs-/Transportaufbau sein, welche(r) an dem Fahrgestell angeordnet ist. Es können Mittel zur temporären lösbaren Fixierung, Sicherung oder dergleichen von auf der Ladefläche abgestellten Ladungsträgern vorgesehen sein, die am Fahrgestell und/oder an einem Ladungs-/Transportaufbau oder dergleichen angeordnet sind. Der oder die Ladungsträger können jedoch während des Transports auch von der Ladungsträgeraufnahmeeinrichtung fixiert oder gesichert werden. Die Ladungsträgeraufnahmeeinrichtung stellt den oder die Ladungsträger dann zwar gegebenenfalls auch auf der Ladefläche ab, gibt den oder die Ladungsträger jedoch nicht (vollständig) frei. Die Ladefläche kann so an dem Fahrgestell angeordnet sein, dass die Ladefläche gegenüber dem Fahrgestell in Längsrichtung und/oder in Querrichtung neigbar ist und die Ladefläche insbesondere dazu ausgebildet sein, auf der Ladefläche abgestellte Ladungsträger stets in einer horizontalen/waagerechten Ebene zu halten.

Erfindungsgemäß ist vorgesehen, dass die Ladungsträgeraufnahmeeinrichtung eines entsprechenden autonomen mobilen Roboters in einer Umgebung eines der beiden längsseitigen Enden des Fahrgestells, also im Bereich einer der beiden Querseiten des Fahrgestells, angeordnet ist. Die Ladungsträgeraufnahmeeinrichtung ist in diesem Sinne am Fahrgestell eines erfindungsgemäßen autonomen mobilen Roboters bezüglich der Vorzugslängsachse und ihrem Schnittpunkt mit der Vorzugsquerachse entlang der Vorzugslängsachse deutlich außermittig und somit asymmetrisch platziert. Jeder räumlicher Bereich unmittelbar vor derjenigen Querseite des Fahrgestells eines erfindungsgemäßen autonomen mobilen Roboters, deren Umgebung die Ladungsträgeraufnahmeeinrichtung angeordnet ist und innerhalb dessen die Ladungsträgeraufnahmeeinrichtung zumindest einen Ladungsträger aufnehmen und/oder abstellen kann, ist der aufnahmeseitige/abstellseitige Operationsbereich der Ladungsträgeraufnahmeeinrichtung. Demgegenüber steht entlang der Vorzugslängsachse der transportseitige Operationsbereich der Ladungsträgeraufnahmeeinrichtung. Der transportseitige Operationsbereiches ist derjenige räumliche Bereich, innerhalb dessen mittels der Ladungsträgeraufnahmeeinrichtung zumindest ein Ladungsträger auf dem Fahrgestelllauf einer Ladefläche abgesetzt bzw. abgestellt, zumindest ein auf dem Fahrgestell/der Ladefläche abgesetzter bzw. abgestellter Ladungsträger (wieder) aufgenommen und/oder zumindest ein Ladungsträger in einer Position vollständig über dem Fahrgestell schwebend gehalten werden kann. Unter einer Position vollständig über dem Fahrgestell (schwebend) ist dabei zu verstehen, dass bei einer gemeinsamen Projektion des Fahrgestells und des Ladungsträgers in eine Ebene parallel zu der Fahrgestellebene (oder in die Fahrgestellebene selber) die Außenkonturen der Projektion des Ladungsträgers vollständig innerhalb der Außenkonturen der Projektion des Fahrgestells angeordnet sind, wobei die Armdrehachse der schwenkbaren bzw. drehbaren Arme der Ladungsträgeraufnahmeeinrichtung außerhalb der Außenkonturen der Projektion des Ladungsträgers verläuft.

Die letztere Bedingung den Verlauf der Armdrehachse bei einer solchen Projektion betreffend ist wesentlich für das Verständnis der einzigartigen Funktionsweise der Ladungsträgeraufnahmeeinrichtung eines erfindungsgemäßen autonomen mobilen Roboters und damit eines entsprechenden autonomen mobilen Roboters als Ganzes: eine Vertikalebene, die zu der Fahrgestellebene senkrecht ist, wobei die Armdrehachse in eben dieser Vertikalebene verläuft, teilt den Raum um einen erfindungsgemäßen autonomen mobilen Roboter in einen ersten räumlichen Bereich und einen zweiten räumlichen Bereich. Dabei schneiden sich eine Ebene, die parallel zu der Fahrgestellebene auf Höhe der Armdrehachse verläuft und die Vertikalebene dann genau in einer Linie, die mit der Armdrehachse zusammenfällt. Der erste räumliche Bereich beinhaltet vollständig den aufnahmeseitigen/abstellseitigen Operationsbereich und der zweite räumliche Bereich vollständig den transportseitigen Operationsbereich. Um einen von der Ladungsträgeraufnahmeeinrichtung aufgenommenen und gehaltenen Ladungsträger von dem aufnahmeseitigen/abstellseitigen Operationsbereich in den transportseitigen Operationsbereich oder umgekehrt zu verbringen bzw. zu bewegen, muss der Ladungsträger von der Ladungsträgeraufnahmeeinrichtung vollständig durch die Vertikalebene hindurch bewegt werden. Auch die Ladungsträgeraufnahmeeinrichtung eines erfindungsgemä-βen autonomen mobilen Roboters als Ganzes wird dabei fast vollständig durch die Vertikalebene von dem ersten räumlichen Bereich in den zweiten räumlichen Bereich bewegt bzw. geschwenkt. Ausgenommen sind davon grundsätzlich zunächst nur die endseitigen Bereiche der schwenkbaren bzw. drehbaren Arme einer Ladungsträgeraufnahmeeinrichtung eben dort, wo die schwenkbaren bzw. drehbaren Arme schwenkbar bzw. drehbar um die Armdrehachse gelagert sind: die Armdrehachse verläuft in der Vertikalebene und damit gerade an der Grenze zwischen den beiden räumlichen Bereichen. Die schwenkbaren bzw. drehbaren Arme sind wesentlich für die (Schwenk-)Bewegung der Ladungsträgeraufnahmeeinrichtung von einem räumlichen Bereich in den jeweils anderen räumlichen Bereich bzw. zwischen den beiden Operationsbereichen der Ladungsträgeraufnahmeeinrichtung. Die Ladungsträgeraufnahmeeinrichtung eines erfindungsgemäßen autonomen mobilen Roboters kann natürlich auch ohne das die Ladungsträgeraufnahmeeinrichtung zumindest einen Ladungsträger zunächst aufnimmt bzw. aufgenommen hat aus dem ersten Bereich bzw. dem aufnahmeseitigen/abstellseitigen Operationsbereich in den zweiten Bereich bzw. den transportseitigen Operationsbereich schwenken oder umgekehrt.

Bei der Aufnahme eines oder mehrerer Ladungsträger durch die Ladungsträgeraufnahmeeinrichtung eines erfindungsgemäßen autonomen mobilen Roboters kann sich abhängig von Gewicht und Größe des oder der aufzunehmenden Ladungsträger die Lage des Schwerpunkts des autonomen mobilen Roboters erheblich und ungünstig verändern, was schlimmstenfalls dazu führen kann, dass der autonome mobile Roboter bereits bei der Aufnahme des oder der Ladungsträger überkippt oder umkippt. Gleiches gilt beim (Wieder-)Absetzen eines oder mehrerer, zu einem früheren Zeitpunkt bereits durch die Ladungsträgeraufnahmeeinrichtung aufgenommener Ladungsträger. Sofern der oder die Ladungsträger während des Transportvorgangs nicht in zentraler Position über dem Fahrgestell gehalten oder auf der Ladefläche abgesetzt werden, kann unter anderem die Fahrdynamik und Betriebssicherheit durch die ungünstige Schwerpunktlage beeinträchtigt werden. Zur Kompensation kann daher zumindest ein in Längsrichtung und/oder Querrichtung bewegbares Ausgleichsgewicht vorgesehen sein. Das Ausgleichsgewicht kann im und/oder am Fahrgestell vorgesehen sein. Das Ausgleichsgewicht kann aber auch an einem Aufbau auf dem Fahrgestell und/oder an der Ladungsträgeraufnahmeeinrichtung angeordnet bzw. Teil der Ladungsträgeraufnahmeeinrichtung sein. Es kann zudem vorgesehen sein, dass das Ausgleichsgewicht etwa mittels eines Auslegers oder eines (weiteren) Arms, an dessen freien Ende das Ausgleichsgewicht angeordnet ist, in Längs- und/oder Querrichtung über ein längsseitiges und/oder querseitiges Ende des Fahrgestells hinaus ausfahrbar ist, ausschwenkbar ist oder dergleichen. Vorzugsweise ist das Ausgleichsgewicht an einem längsseitigen und/oder querseitigen Ende angeordnet und/oder gegebenenfalls über dieses Ende hinaus ausfahrbar, ausschwenkbar oder dergleichen, dass gegenüber einem längs- oder querseitigen Ende des Fahrgestells angeordnet ist, an dem eine Aufnahme und/oder ein Absetzen von Ladungsträgern durch die Ladungsträgeraufnahmeeinrichtung vorgesehen ist. Durch das Vorsehen eines (weiteren) Arms oder (weiteren) Auslegers kann eine zusätzliche Hebelwirkung zur Kompensation der Hebelwirkung eines oder mehrerer, mit der Ladungsträgeraufnahmeeinrichtung aufgenommener Ladungsträger erzielt werden.

Bei dem erfindungsgemäßen autonomen mobilen Roboter weist jeder schwenkbare Arm eine im Bereich des jeweiligen freien Endes des Arms angeordnete Greifeinrichtung als Mittel zum Greifen zumindest eines Ladungsträgers auf. Bei einer alternativen erfindungsgemäßen Ausgestaltung eines erfindungsgemäßen autonomen mobilen Roboters ist vorgesehen, dass die schwenkbaren Arme eine im Bereich ihres jeweiligen freien Endes angeordnete gemeinsame Greifeinrichtung als Mittel zum Greifen zumindest eines Ladungsträgers aufweisen. Die gemeinsame Greifeinrichtung verbindet die beiden schwenkbaren bzw. drehbaren Arme dabei so miteinander, dass diese eine integrierte Einheit bilden.

Die in einem Bereich am freien Ende eines der schwenkbaren Arme an dem Arm angeordnete jeweilige oder gemeinsame Greifeinrichtung ist vorzugsweise um wenigstens eine, besonders bevorzugt um eine horizontal, also parallel zu der Fahrgestellebene, verlaufende Greifeinrichtungsdrehachse drehbar an dem freien Ende des schwenkbaren Arms gelagert. Zur entsprechenden (gesteuerten bzw. steuerbaren) Drehung der Greifeinrichtung können ebenfalls etwa Elektromotoren, oder elektromechanische, hydraulische oder pneumatische Aktuatoren vorgesehen sein. Eine Greifeinrichtung eines erfindungsgemäßen autonomen mobilen Roboters ist zum Greifen von Ladungsträgern, insbesondere Paletten, Gitterboxen und Kleinladungsträgern ausgebildet. Die freie und/oder gesteuerte bzw. steuerbare Drehbarkeit der Greifeinrichtung(en) um eine Greifeinrichtungsdrehachse ist insbesondere dahingehend zweckmäßig, beim Schwenken bzw. Drehen der schwenkbaren Arme der Ladungsträgeraufnahmeeinrichtung um die Armdrehachse von der Ladungsträgeraufnahmeeinrichtung aufgenommene und getragene Ladungsträger in einer im Wesentlichen horizontalen Ausrichtung zu halten.

Bei einer weiteren begünstigten Ausgestaltung eines erfindungsgemäßen autonomen mobilen Roboters ist vorgesehen, dass die vertikale Lage der Armdrehachse bezüglich der Fahrgestellebene und/oder entlang der Vorzugslängsachse zumindest ein Stück weit veränderbar ist.

Nach einer weiteren präferierten Ausgestaltungsvariante eines erfindungsgemä-βen autonomen mobilen Roboters sind die schwenkbaren Arme mehrteilig und/oder segmentiert ausgebildet.

Eine weitere begünstigte Ausgestaltungsvariante eines erfindungsgemäßen autonomen mobilen Roboters umfasst eine teleskopierbare Ausgestaltung eines jeden der schwenkbaren Arme. Durch die veränderbare Länge der schwenkbaren Arme kann die Flexibilität einer entsprechend ausgebildeten Ladungsträgeraufnahmeeinrichtung weiter verbessert werden.

Gemäß einer weiteren favorisierten Ausgestaltung eines erfindungsgemäßen autonomen mobilen Roboters sind die schwenkbaren Arme als Gelenkarme ausgebildet. Bei einer Ausgestaltung der schwenkbaren Arme einer Ladungsträgeraufnahmeeinrichtung als Gelenkarm, Knickarm oder dergleichen weist jeder der schwenkbaren Arme zumindest zwei Teile, Segmente oder dergleichen auf, die aneinander anschließen und über zumindest ein Drehgelenk miteinander verbunden sind, sodass sich wenigstens eines der Teile, Segmente oder dergleichen gegenüber dem jeweils anderen zumindest ein Stück weit um eine Drehgelenkdrehachse des Drehgelenks drehen kann. Vorzugsweise ist die Drehgelenkdrehachse parallel zu der Armdrehachse. Zur Drehung bzw. Schwenkung der schwenkbaren Arme, ebenso zur Veränderung der Ausrichtung von den Teilen, Segmenten oder dergleichen der schwenkbaren Arme entsprechender Ausgestaltung eines schwenkbaren Arms können etwa Elektromotoren oder elektromechanische, hydraulische oder pneumatische Aktuatoren vorgesehen sein. Eine Ausgestaltung der schwenkbaren Arme einer Ladungsträgeraufnahmeeinrichtung als Gelenkarm, Knickarm oder dergleichen ist insbesondere zweckmäßig, um von einer derartigen Ladungsträgeraufnahmeeinrichtung aufgenommene und getragene Ladungsträger beim Schwenken bzw. Drehen der schwenkbaren Arme stets in einer im Wesentlichen horizontalen Ausrichtung zu halten.

Bei einem nicht erfindungsgemäßen autonomen mobilen Roboter weist die Greifeinrichtung ein oder mehrere Tragelemente auf, die in einem seitlichen Freiraum und/oder in seitlichen Freiräumen in einem Ladungsträger mit dem Ladungsträger zum Aufnehmen des Ladungsträgers in Eingriff bringbar und zum Abstellen und Freigeben eines Ladungsträgers mit einem seitlichen Freiraum und/oder seitlichen Freiräumen in dem Ladungsträger außer Eingriff bringbar sind, wobei die Tragelemente in einer Aufnahmepose zur Aufnahme eines Ladungsträgers von einem Boden oder vom Fahrgestell bzw. einer Abstellpose zum Abstellen eines Ladungsträgers auf einem Boden und/oder auf dem Fahrgestell im Wesentlichen parallel zu einer horizontalen Ebene und/oder im Wesentlichen parallel zur Fahrgestellebene ausgerichtet oder ausrichtbar sind. Vorzugsweise sind die Tragelemente in einer Tragelementebene schwenkbar bzw. drehbar ausgebildet, wobei die Tragelementdrehachse folglich senkrecht zu einer Tragelementebene verläuft. Eine andere, alternative Ausgestaltung sieht vor, dass die Tragelemente in einer Tragelementebene linear verschiebbar ausgebildet sind.

Erfindungsgemäß weist die Greifeinrichtung des autonomen mobilen Roboters ein oder mehrere Tragelemente auf, die in einem stirnseitigen Freiraum und/oder in stirnseitigen Freiräumen in einem Ladungsträger mit dem Ladungsträger zum Aufnehmen des Ladungsträgers in Eingriff bringbar und zum Abstellen und Freigeben eines Ladungsträgers mit einem stirnseitigen Freiraum und/oder stirnseitigen Freiräumen in dem Ladungsträger außer Eingriff bringbar sind, wobei die Tragelemente in einer Aufnahmepose zur Aufnahme eines Ladungsträgers von einem Boden oder vom Fahrgestell bzw. einer Abstellpose zum Abstellen eines Ladungsträgers auf einem Boden und/oder auf dem Fahrgestell im Wesentlichen parallel zu einer horizontalen Ebene und/oder im Wesentlichen parallel zur Fahrgestellebene ausgerichtet oder ausrichtbar sind. Die Greifeinrichtung kann identisch oder zumindest vergleichbar zu den bekannten Gabelträgern von Gabel- oder Hubstaplern ausgebildet sein, die Tragelemente sind dann demnach identisch oder zumindest vergleichbar mit den Gabeln eines solchen Gabelträgers ausgebildet. Insbesondere können die Gabeln einer derartigen gabelträgerartigen Greifeinrichtung in einer Tragelementebene linear verschiebbar ausgebildet sein.

Die Stirnseite eines Ladungsträgers ist dabei als diejenige Längs- oder auch Querseite eines Ladungsträgers zu verstehen, die unmittelbar beim Aufnehmen des Ladungsträgers an einer Aufnahmeposition und/oder beim Absetzen des Ladungsträgers an einer Absetzposition durch eine Ladungsträgeraufnahmeeinrichtung eines erfindungsgemäßen autonomen mobilen Roboters derjenigen Querseite bzw. desjenigen längsseitigen Endes des Fahrgestells des autonomen mobilen Roboters zugewandt und dieser bzw. diesem am nächsten ist, in deren bzw. dessen Umgebung die schwenkbaren Arme der Ladungsträgeraufnahmeeinrichtung bzw. die Ladungsträgeraufnahmeeinrichtung als Ganzes angeordnet sind/ist. Längsseitige Seiten eines Ladungsträgers zeichnen sich demgegenüber im Wesentlichen dadurch aus, dass diese im Zuge des Aufnehmens, des Absetzens und/oder des Transports eines Ladungsträgers mittels eines erfindungsgemäßen autonomen mobilen Roboters keine möglichen Stirnseiten sind.

Als Pose wird die Position und Ausrichtung der Tragelemente verstanden, als Aufnahmepose bzw. Abstellpose im Speziellen also die Position und Ausrichtung der Tragelemente beim Aufnehmen bzw. Abstellen zumindest eines Ladungsträgers durch die Ladungsträgeraufnahmeeinrichtung einer erfindungsgemäßen autonomen mobilen Roboters. Die Pose der Tragelemente ist im Allgemeinen nicht auf die vorstehend beschriebenen speziellen Posen beim Aufnehmen und/oder Abstellen von Ladungsträgern beschränkt. Da die Tragelemente einer Ladungsträgeraufnahmeeinrichtung an einer oder mehreren Greifeinrichtungen der Ladungsträgeraufnahmeeinrichtung angeordnet sind, ist eine jeweilige Pose der Tragelemente auch mit einer entsprechenden Pose der Greifeinrichtung(en) sowie der Ladungsträgeraufnahmeeinrichtung als Ganzes verknüpft. Die vorstehend beschriebenen Tragelemente die entweder zum seitlichen Eingriff oder zum stirnseitigen Eingriff in entsprechende seitliche oder stirnseitige Freiräume, Ausnehmungen, Aussparungen oder dergleichen in einem Ladungsträger ausgebildet sind, sind besonders zweckmäßig einsetzbar, wenn es sich bei den Ladungsträgern um Gebinde/Verpackungseinheiten auf Basis einer Palette oder dergleichen handelt.

Nach einer weiteren Ausgestaltungsvariante eines nicht erfindungsgemäßen autonomen mobilen Roboters umfasst die Greifeinrichtung zumindest ein expandierbares und nach einer Expansion wieder in einen Ursprungszustand kontrahierbares, flexibles ballonartiges Element, wobei durch Expansion des ballonartigen Elements ein Ladungsträger beidseitig zum Aufnehmen des Ladungsträgers in der Ladungsträgeraufnahmeeinrichtung einspannbar und für das Abstellen und Freigeben eines Ladungsträgers das ballonartige Element kontrahierbar ist. Beim Einspannen eines Ladungsträgers greift das ballonartige Element seitlich an dem Ladungsträger an und gegebenenfalls auch zumindest teilweise in eine oder mehrere seitliche Freiräume (Ausnehmungen, Aussparungen) in dem betreffenden Ladungsträger ein. Die Expansion des ballonartigen Elements kann etwa mittels Beaufschlagung durch Druckluft erfolgen, die Kontraktion nach einer Beaufschlagung mit Druckluft aus einem expandierten Zustand in einen weniger expandierten Zustand oder in einen Ursprungszustand ohne Expansion durch zumindest teilweisen oder vollständigen Druckausgleich mit der Umgebung. Ein erfindungsgemäßer autonomer mobiler Roboter mit einer derartig ausgebildeten Greifeinrichtung umfasst zweckmäßigerweise eine Vorrichtung zur Speicherung von Druckluft oder Vorrichtung zur Erzeugung von Druckluft ("Druckluft-Kompressor") und Mittel zur Leitung der Druckluft vom Speicher oder Erzeuger zu dem oder den ballonartigen Elementen (Druckluftleitungen, Ventile, etc.).

Eine weitere besonders favorisierte Ausgestaltungsvariante eines erfindungsgemä-βen autonomen mobilen Roboters sieht vor, dass die schwenkbaren Arme an ihrem jeweiligen festen Ende, in dessen Umgebung die schwenkbaren Arme schwenkbar um die Armdrehachse gelagert sind, parallel zu der Vorzugsquerachse direkt an dem Fahrgestell, über eine (jeweilige) am Fahrgestell angeordnete Armhalterung und/oder über einen auf dem Fahrgestell angeordneten Ladungs-/Transportaufbau an dem Fahrgestell fixiert sind. Ein Ladungs-/Transportaufbau ist dabei an der Oberseite des Fahrgestells an dem Fahrgestell angeordnet. An einer Oberseite des Ladungs-/Transportaufbaus ist dann entsprechend eine Ladefläche ausgebildet. In einem Inneren eines Ladungs-/Transportaufbaus können etwa Motoren zur Drehung der schwenkbaren Arme um deren Armdrehsachse und weitere Mittel zur Steuerung, etwa Steuergeräte, angeordnet sein, die bei anderen alternativen Ausführungsformen am bzw. im Fahrgestell angeordnet sind. Ein Ladungs-/Transportaufbau kann zusammen mit der Ladungsträgeraufnahmeeinrichtung integral ausgebildet sein und somit einen integrierten Ladungs-/Transportaufbau bilden, der als integrierte Einheit auf ein korrespondierendes, d. h, zum Zusammenwirken mit der integrierten Ladungs-/Transporteinheit ausgebildete, Fahrgestell aufgesetzt wird oder aufgesetzt ist und auf diese Weise ein erfindungsgemäßer autonomer mobiler Roboter ausgebildet werden bzw. ausgebildet sein.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen in stark vereinfachter, prinzipieller schematischer Darstellung:
Fig. 1 einen nicht erfindungsgemäßen autonomen mobilen Roboter in einer erster Ausgestaltungsvariante in dreidimensionaler isometrischer Ansicht bei Aufnahme eines Ladungsträgers durch die Ladungsträgeraufnahmeeinrichtung;
Fig. 2 einen nicht erfindungsgemäßen autonomen mobilen Roboter in einer ersten Ausgestaltungsvariante in dreidimensionaler isometrischer Ansicht mit einem auf der Ladefläche abgestellten Ladungsträger;
Fig. 3 einen nicht erfindungsgemäßen autonomen mobilen Roboter in einer ersten Ausgestaltungsvariante in dreidimensionaler isometrischer Ansicht mit der Ladungsträgeraufnahmeeinrichtung in Ladungsträgeraufnahmepose, aber ohne Ladungsträger;
Fig. 4 Einen erfindungsgemäßen autonomen mobilen Roboter in einer zweiten Ausgestaltungsvariante in dreidimensionaler isometrischer Ansicht mit der Ladungsträgeraufnahmeeinrichtung in Aufnahmepose zur Aufnahme eines Ladungsträgers von einem Boden; und
Fig. 5 einen erfindungsgemäßen autonomen mobilen Roboter in einer zweiten Ausgestaltungsvariante in dreidimensionaler isometrischer Ansicht mit einem auf der Ladefläche abgestellten Ladungsträger.

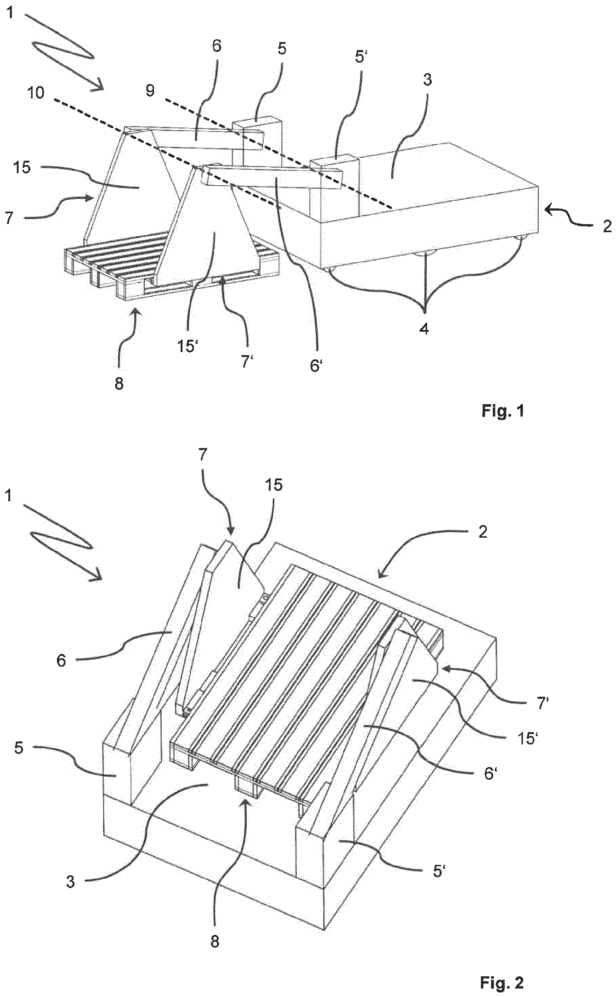

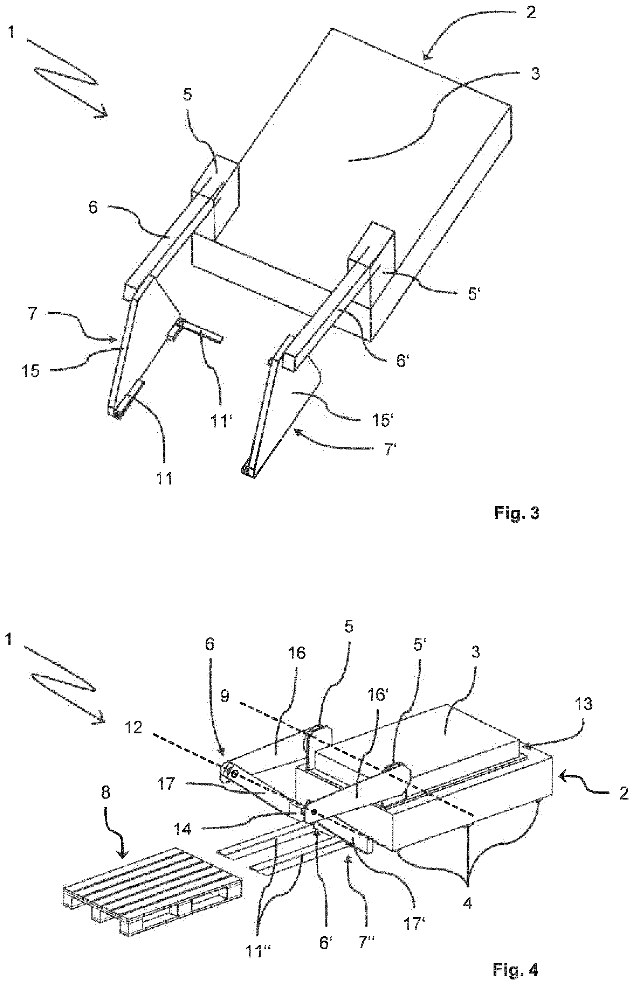

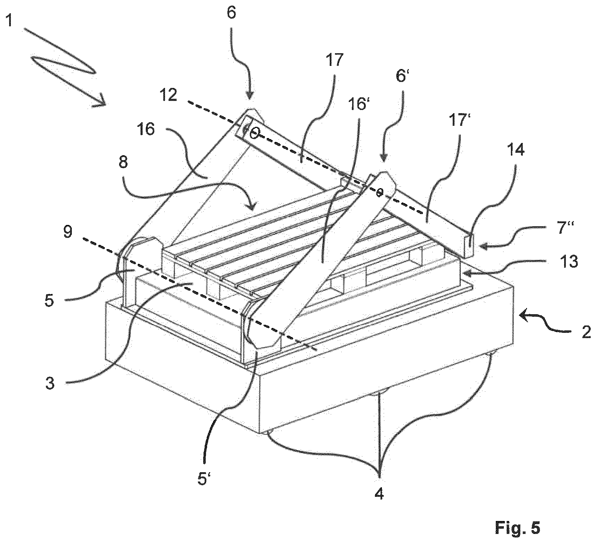

Die Figuren 1 bis 3 zeigen eine nicht erfindungsgemäße erste Ausgestaltungsvariante und die Figuren 4 sowie 5 eine erfindungsgemäße zweite Ausgestaltungsvariante eines autonomen mobilen Roboters 1 zur Aufnahme, zum Abstellen und Transportieren von Ladungsträgern 8. Der Unterschied zwischen beiden Ausgestaltungsvarianten liegt in der jeweiligen Ausbildung der Ladungsträgeraufnahmeeinrichtung. Bei der ersten Variante ist dabei vorgesehen, dass die Greifeinrichtung(en) 7, 7' der Ladungsträgeraufnahmeeinrichtung seitlich in gegenüberliegende längsseitige Freiräume eines Ladungsträgers 8 eingreifen. Bei der zweiten Variante ist hingegen vorgesehen, dass der Eingriff der Greifeinrichtung 7" der Ladungsträgeraufnahmeeinrichtung in stirnseitige Freiräume eines Ladungsträgers 8 erfolgt. In allen Figuren sind die jeweiligen Ausgestaltungsvarianten eines autonomen mobilen Roboters 1 lediglich schematisch in starker Vereinfachung mit den allerwesentlichsten Details dargestellt. Alle in den Figuren gezeigten Ausgestaltungsvarianten eines autonomen mobilen Roboters 1 umfassen ein Fahrgestell 2 mit einem in Form von drei Rollenpaaren 4 zur Bewegung über einen im wesentlichen ebenen Boden angedeuteten Fahrwerk, wobei in den Figuren 1, 4 und 5 jeweils nur eine Rolle eines jeden Rollenpaares 4 ansatzweise sichtbar ist, die jeweils andere Rolle eines jeden Rollenpaares 4 ist an der gegenüberliegenden Längsseite des Fahrgestells angeordnet und in keiner der genannten Figuren sichtbar. In den Figuren 2 und 3 sind die Rollen/Rollenpaare 4 gar nicht sichtbar.

Das Fahrgestell 2 des autonomen mobilen Roboters 1 ist in den Figuren stark vereinfacht rechteckig, flach kastenförmig ausgebildet. Die ebene Oberseite des Fahrgestells 1 ist dabei als Ladefläche 3 für Ladungsträger 8 ausgebildet. Die Ladefläche 3 ist parallel zu der Fahrgestellebene und kann ohne Beschränkung der Allgemeinheit als solche definiert werden. Die Ladefläche 3 ist dazu ausgebildet, Ladungsträger 8 zumindest während des Transports mit dem autonomen mobilen Roboter 1 von einem ersten Ort, dem Aufnahmeort, zu einem zweiten, von dem ersten Ort verschiedenen Ort, dem Abstellort, zu tragen. In den Figuren ist ein Ladungsträger 8 exemplarisch in Form einer Transportpalette 8, im Folgenden kurz Palette 8, ohne Ladegut gezeigt.

Zunächst muss ein von dem autonomen mobilen Roboter 1 von einem Aufnahmeort zu einem Abstellort zu transportierender Ladungsträger 8 jedoch von dem autonomen mobilen Roboter 1 aufgenommen werden. Dazu weist der autonome mobile Roboter 1 eine Ladungsträgeraufnahmeeinrichtung auf. Bei dem in den Figuren 1 bis 3 dargestellten Ausführungsbeispiel umfasst die Ladungsträgeraufnahmeeinrichtung zwei einteilige schwenkbare Arme 6, 6' an deren freien Enden jeweils eine Greifeinrichtung 7, 7' um die Greifeinrichtungsdrehachse 10 (frei) drehbar angeordnet ist. Die schwenkbaren Arme 6, 6' selbst sind schwenkbar bzw. drehbar um die Armdrehachse 9 an einer jeweiligen Armhalterung 5, 5' an in Querrichtung gegenüberliegenden Seiten an einem längsseitigen Ende des Fahrgestells 2 gelagert und in den Figuren 1 bis 3 vereinfacht als Balken mit rechteckförmigem Querschnitt dargestellt. Die schwenkbaren Arme 6, 6' schwenken bzw. drehen sich also in einer Ebene senkrecht zu der Fahrgestellebene und sind in dieser Ebene letztendlich soweit um ihre Drehachse 9 schwenkbar, bis die Greifeinrichtungen 7, 7' mit Ihrer Unterkante entweder einerseits auf einem im Wesentlichen ebenen Boden, auf dem sich der autonome mobiler Roboter 1 befindet (der in den Figuren jedoch nicht dargestellt ist), oder andererseits auf der Ladefläche 3 aufsitzen. Die Armhalterungen 5 sind oberseitig und längsseitig gegenüberliegend an einem der beiden längsseitigen Endes des Fahrgestells 2 angeordnet. Die beiden Armhalterungen 5, 5', die beiden schwenkbaren Arme 6, 6' und die beiden jeweiligen Greifeinrichtungen 7, 7' sind identisch ausgeführt und spiegelbildlich bzw. symmetrisch zu einer zu der Fahrgestellebene des autonomen mobilen Roboters 1 senkrechten Ebene, die die Fahrgestellebene entlang der Vorzugslängsachse des Fahrgestells 2 schneidet, angeordnet. Damit ist die Ladungsträgeraufnahmeeinrichtung als Ganzes entsprechend symmetrisch ausgebildet. Die beiden schwenkbaren Arme 6, 6' mit der jeweiligen Greifeinrichtung 7 operieren dabei stets vollständig synchron als eine gemeinsame Einheit. Die Greifeinrichtungsdrehachse 10 und die Armdrehachse 9 verlaufen parallel zueinander. Die besagten Achsen sind das erste Ausführungsbeispiel betreffend nur in Figur 1 explizit angedeutet.

Die Greifeinrichtungen 7, 7' bestehen im Wesentlichen aus einem jeweiligen Seitenträger 15, 15' von flacher, etwa dreieckförmiger Gestalt (die Ecken/Spitzen der Dreiecksform sind etwas gekappt), wobei die parallelen flachen Seiten der Seitenträger 15, 15' parallel zu einer zu der Fahrgestellebene senkrechten Ebene ausgerichtet sind, wobei eine solche Ebene wiederum zumindest parallel zu einer jeweiligen Ebene ist, in der ein jeder der schwenkbaren bzw. drehbaren Arme 6, 6' schwenken bzw. sich drehen kann. An der jeweiligen einander zugewandten Innenseiten weist jede Greifeinrichtung 7, 7' nahe der in den Figuren unteren Seitenkante des jeweiligen Seitenträgers 15, 15' zwei schwenkbare Tragelemente 11 und 11' auf, die nur in der Darstellung eines autonomen mobilen Roboters 1 in einer ersten Ausgestaltungsvariante in Figur 3 ohne Ladungsträger 8 explizit sichtbar sind. Bei der Darstellung in Figur 3 ist das jeweilige vordere Tragelement 11 eingeschwenkt in einem Nichtgebrauchszustand und das hintere Tragelement 11' in einem vollständig ausgeschwenkten Gebrauchszustand dargestellt. Die Tragelemente 11, 11' stehen von der jeweiligen Innenseite der Seitenträger 15, 15' senkrecht ab. Die Tragelemente 11, 11' sind in einer horizontalen Ebene parallel zu dem Fahrgestell 2 und/oder parallel zu einem (ebenen) Boden, etwa einem Boden, auf dem sich ein aufzunehmender Ladungsträger 7 befindet, schwenkbar (dies bezieht sich speziell auf die Aufnahmepose und/oder Abstellpose der Tragelemente 11, 11' respektive der Greifeinrichtungen 7, 7' bzw. der Ladungsträgeraufnahmeeinrichtung als Ganzes). Die Drehachse der Tragelemente 11, 11' ist folglich senkrecht zu dieser Ebene, der Drehwinkel zwischen dem Nichtgebrauchszustand (vollständig eingeschwenkt) und dem Gebrauchszustand (vollständig ausgeschwenkt) beträgt 90°.

Zur Aufnahme eines Ladungsträgers wie der Palette 8 von einem Boden fährt der autonome mobile Roboter 1 auf dem Boden zunächst einmal so an den aufzunehmenden Ladungsträger 8 heran (Boden in den Figuren nicht explizit dargestellt), dass der Ladungsträger 8 sich mit einer schmalen Seite in geringem Abstand in mittiger Position und paralleler Ausrichtung vor dem längsseitigen Ende des Fahrgestells 2 des autonomen mobilen Roboters befindet, an dem die Ladungsträgeraufnahmeeinrichtung angeordnet ist. Wie in Figur 1 dargestellt, werden zur Aufnahme der Palette 8 die Tragelemente 11, 11' durch entsprechende Schwenkung der schwenkbaren Arme 6 so beiderseitig in geringem Abstand neben den Längsseiten der Palette 8 positioniert, dass die Trageelemente 11, 11' der Greifeinrichtungen 7 in die beiden beiderseitigen längsseitigen Freiräume (Ausnehmungen, Aussparungen) der Palette 8 einschwenken können. Jedes Tragelement schwenkt dabei in einen separaten Freiraum ein. Bei anschließender simultaner Schwenkung bzw. Drehung der schwenkbaren Arme 6, 6' um die gemeinsame Armdrehachse 9 derart, dass die Tragelemente 11, 11' vom Boden nach oben weg bewegt werden, wird zunächst ein Kontakt der Oberseite der Tragelemente 11, 11' mit der Unterseite der Längsbretter der Palette 8 hergestellt. Die Palette 8 liegt dann auf den Tragelementen 11, 11' auf, wird anschließend angehoben und dabei von der Ladungsträgeraufnahmeeinrichtung über die Tragelemente 11, 11' beidseitig sicher gehalten.

Grundsätzlich könnte der autonome mobile Roboter 1 bereits mit der ein Stück weit über den Boden angehobenen Palette 8 den Transportvorgang von dem Aufnahmeort zu einem von dem Aufnahmeort entfernten Absetzort für die Palette 8 beginnen bzw. die Palette 8 entlang des gesamten Transportwegs ganz oder zumindest teilweise vor und/oder über dem Fahrgestell 2 gewissermaßen in der Luft hängend zu transportieren. Allerdings ist eine solche Vorgehensweise wegen der ungünstigen Schwerpunktlage eines autonomen mobilen Roboters 1 mit einem in Längsrichtung deutlich überhängenden Ladungsträger 8 unter anderem aus Gründen der Fahrdynamik und der Betriebssicherheit weniger vorteilhaft. Es ist daher zweckmäßig, durch entsprechende Schwenkung bzw. Drehung der schwenkbaren bzw. drehbaren Arme 6, 6' um ihre gemeinsame Drehachse 9 den Ladungsträger 8 in eine Position vollständig über der Ladefläche 3 zu verbringen bzw. zu schwenken, wobei durch die drehbare Lagerung der Greifeinrichtungen 7 um die Greifeinrichtungsdrehachse 10 beim Schwenken sichergestellt ist, dass der Ladungsträger 8 stets (in etwa) parallel zu einer horizontalen Ebene und/oder zu der Fahrgestellebene ausgerichtet ist. 3 Der Ladungsträger 8 schwebt dann entweder in geringer Höhe, gehalten von den Greifeinrichtungen 7, über der Ladefläche 3 oder er ist auf der Ladefläche 3 abgesetzt, wobei die weiterhin in die längsseitigen Freiräume (Ausnehmungen, Aussparungen) eingeschwenkten Tragelemente 11, 11' den Ladungsträger 8 auf der Ladefläche 3 gegen ungewollte/unerwünschte Bewegungen insbesondere entlang der Vorzugslängsrichtung sichern. Diese Situation ist in Figur 2 dargestellt.

Beim Verbringen bzw. Bewegen des Ladungsträgers 8 von der Aufnahmeposition in eine Position vollständig über der Ladefläche wird der Ladungsträger 8 vollständig durch eine Vertikalebene, die senkrecht zu der Fahrgestellebene ist und zugleich die Armdrehachse 9 mit dieser Vertikalebene zusammenfällt, hindurch bewegt. Die Vertikalebene trennt entlang der Vorzugslängsachse des Fahrgestells 2 des autonomen mobilen Roboters 1 den Raum in einen ersten räumlichen Bereich und eine zweiten räumlichen Bereich. Der erste räumliche Bereich umfasst den aufnahmeseitigen/abstellseitigen Operationsbereich für einen Ladungsträger 8, also alle Position, an denen durch die Ladungsträgeraufnahmeeinrichtung des autonomen mobilen Roboters 1 vor dem längsseitigen Ende des Fahrgestells 2, in dessen Umgebung die Ladungsträgeraufnahmeeinrichtung an dem Fahrgestell 2 angeordnet ist, an einem Aufnahmeort ein Ladungsträger 8 aufgenommen und/oder an einem Abstellort ein Ladungsträger 8 abgestellt werden kann. Der zweite räumliche Bereich beinhaltet den transportseitigen Operationsbereich mit allen möglichen Positionen für eine Positionierung des Ladungsträgers 8 vollständig über dem Fahrgestell 2, was auch ein Absetzen auf bzw. ein (Wieder-)Aufnehmen des Ladungsträgers von der Ladefläche 3 einschließt. Ein Verbringen bzw. Bewegen eines Ladungsträgers 8 aus einer Aufnahmeposition in eine Position vollständig über dem Fahrgestell 2 bzw. auf der Ladefläche 3 oder umgekehrt beinhaltet also immer, dass der Ladungsträger 8 dabei vollständig von dem ersten räumlichen Bereich durch die Vertikalebene hindurch in den zweiten räumlichen Bereich wechselt bzw. bewegt wird oder umgekehrt. Die beiden freien Enden der einteiligen schwenkbaren Arme 6, 6' der Ladungsträgeraufnahmeeinrichtung eines autonomen mobilen Roboters 1 entsprechend dem ersten Ausführungsbeispiel, wie in den Figuren 1 bis 3 dargestellt, passieren dabei jeweils und zugleich simultan den höchsten Punkt gegenüber der Fahrgestellebene. Der Ladungsträger 8 sowie die Greifeinrichtungen 7, 7' werden dabei zwischen den beiden schwenkbaren Armen 6, 6' hindurchgeführt. Zum Abladen bzw. Abstellen und Freigeben des Ladungsträgers 8 an einem Abstellort respektive Zielort zum Ende des Transportvorgangs wird die vorstehend beschriebene Prozedur des Aufnehmens eines Ladungsträgers 8 am Aufnahmeort zu Beginn des Transportvorgangs einfach in umgekehrter Richtung ausgeführt und der Ladungsträger 8 auf einem Boden an einem Abstellort respektive Zielort abgestellt und wieder freigegeben.

Die Figuren 4 und 5 zeigen eine erfindungsgemäße zweite Ausgestaltungsvariante eines autonomen mobilen Roboters 1. Diese Variante basiert lose auf der in den Figuren 1 bis 3 dargestellten ersten Ausgestaltungsvariante. Die Ladungsträgeraufnahmeeinrichtung umfasst daher bei der zweiten Ausgestaltungsvariante ebenfalls zwei schwenkbare bzw. drehbare Arme 6, 6', die schwenkbar bzw. drehbar um eine Armdrehachse 9 jeweils an einer jeweiligen Armhalterung 5, 5' an in Querrichtung gegenüberliegenden Seiten an einem längsseitigen Ende des Fahrgestells 2 gelagert sind. Die Armhalterungen 5, 5' sind jeweils an gegenüberliegenden Längsseiten an einem Ladungs-/Transportaufbau 13 fixiert. Der Ladungs-/Transportaufbau 13 ist ein im Wesentlichen rechteckförmiger flacher Kasten, der liegend auf der flachen Oberseite des Fahrgestells 2 angeordnet und in Vorzugslängs- wie auch in Vorzugsquerrichtung des Fahrgestells 2 jeweils etwas kürzer als die maximale Längs- bzw. Querausdehnung des Fahrgestells 2 ist. Abweichend von der ersten Ausgestaltungsvariante ist die Ladefläche nicht an der Oberseite des Fahrgestells 2, sondern an der Oberseite des Ladungs-/Transportaufbaus 13 des autonomen mobilen Roboters 1 angeordnet bzw. ausgebildet. Der Ladungs-/Transportaufbau 13 beinhaltet die Steuerung für die Ladungsträgeraufnahmeeinrichtung wie Motor(en) zur (gemeinsamen) Drehung der schwenkbaren Arme 6, 6' um die Armdrehachse 9, Elektronik wie Steuergeräte usw. Der Ladungs-/Transportaufbau 13 ist zusammen mit der Ladungsträgeraufnahmeeinrichtung als integrierte Einheit ausgeführt und kann auf einem Fahrgestell 2, dass zum Zusammenwirken mit einem solchen integrierten Ladungs-/Transportaufbau 21 ausgebildet ist, angeordnet werden. Ein solches Fahrgestell 2 ist zwar für sich genommen bereits ein AMR, aber in Ermangelung einer Ladungsträgeraufnahmeeinrichtung bzw. eines integrierten Ladungs-lTransportaufbaus 13 umfassend eine Ladungsträgeraufnahmeeinrichtung nicht zum Aufnehmen, Abstellen und Transportieren von Ladungsträgern (8) geeignet respektive verwendbar. Durch die Anordnung eines integrierten Ladungs-/Transportaufbaus 13 auf dem Fahrgestell 2 ergibt sich dann ein nahezu unmittelbar einsetzbarer erfindungsgemäßer autonomer mobiler Roboter 1.

Anders als bei der ersten Ausgestaltungsvariante eines autonomen mobilen Roboters 1 sind die schwenkbaren Arme 6, 6' hier jeweils zweiteilig bzw. segmentiert und als Gelenkarm ausgebildet, d. h., die beiden Teile des jeweiligen schwenkbaren Arms 6, 6', also das jeweilige das erste Armsegment 16, 16' und das jeweilige zweite Armsegment 17, 17' sind über ein Drehgelenk mit der Drehgelenkdrehachse 12 miteinander verbunden. Die Drehgelenkdrehachse 12 verläuft parallel zu der Armdrehachse 9. An dem jeweiligen freien Ende eines der schwenkbaren Arme 6, 6', zugleich das jeweilige freie Ende des entsprechenden zweiten Armsegments 17, 17', sind die beiden schwenkbaren Arme 6, 6' in Querrichtung durch die Greifeinrichtung 7" miteinander verbunden und bilden von daher bereits eine integrierte Einheit. Zudem sind die beiden schwenkbaren Arme 6, 6' identisch ausgebildet und symmetrisch bzw. spiegelbildlich bezüglich eine zu der Fahrgestellebene senkrechten Ebene, die die Vorzugslängsachse des Fahrgestells 2 des autonomen mobilen Roboters 1 entlang der Vorzugslängsachse schneidet, angeordnet. Die Greifeinrichtung 7" besteht in der Darstellung in den Figuren 11 und 12 aus einem Querträger 14 und zwei entlang des Querträgers 14 beabstandet angeordnete identische Tragelemente 11‴. Der Querträger 14 verbindet die beiden schwenkbaren Arme 6, 6' an ihrem jeweiligen freien Ende starr, also insbesondere nicht drehbar (um eine Achse parallel zur Armdrehachse 9 oder zur Drehgelenkdrehachse 19). Die beiden Tragelemente 11" sind entsprechend den bekannten Gabeln von Hub- oder Gabelstaplern ausgebildet, die Greifeinrichtung 7" insgesamt ist demnach ähnlich den bekannten Gabelträgern von Hub- oder Gabelstaplern ausgebildet.

Zur Aufnahme eines Ladungsträgers 8 an einer Aufnahmeposition von einem Boden fährt der autonome mobiler Roboter 1 mit fast auf den Boden abgesenkter Greifeinrichtung 7" voraus und parallel zu der Bodenebene ausgerichteten Tragelementen 11" auf die Stirnseite an einem der beiden längsseitigen Ende des Ladungsträgers 8 zu, um die beiden Tragelemente 11" jeweils mit einem der stirnseitigen Freiräumen der Palette 8 weitgehend in Eingriff zu bringen. Diese Situation ist in Figur 4 dargestellt. Die Ladungsträgeraufnahmeeinrichtung ist dabei zusätzlich auch noch derart ausgebildet, dass (eventuelle, in den Figuren nicht dargestellte) in dem längsseitigen Ende des Fahrgestells 2, in deren Umgebung auch die Ladungsträgeraufnahmeeinrichtung angeordnet ist, angeordnete Sensorik von der Ladungsträgeraufnahmeeinrichtung insbesondere in einer abgesenkten Pose wie zur Aufnahme oder zum Abstellen von Ladungsträgern 8 von/auf einem Boden analog zu der Darstellung in Figur 4 nicht gestört wird. In den Figuren 4 und 5 ist ein Ladungsträger 8 wieder exemplarisch durch eine Palette 8 ohne Ladegut angedeutet. Sind die Tragelemente 11" der Greifeinrichtung 7" vollständig in Eingriff mit den stirnseitigen Freiräumen in der Palette 8, werden die Tragelemente 11" durch entsprechendes simultanes bzw. synchrones Schwenken respektive Drehen der beiden schwenkbaren Arme 6, 6' der Ladungsträgeraufnahmeeinrichtung, genauer: der jeweiligen ersten Armsegmente 16, 16', um ihre gemeinsame Armdrehachse 9 angehoben und gelangen zunächst mit ihrer Oberseite in Kontakt mit einer Unterseite der Palette 8. Anschließend wird die Palette 8 angehoben und von den Tragelementen 11" sicher gehalten. Durch weiteres entsprechendes simultanes und synchrones Schwenken des jeweiligen ersten Armsegments 16, 16' der beiden schwenkbaren bzw. drehbaren Arme 6, 6' wird die Palette 8 weiter angehoben, über die Ladefläche 3 auf dem Fahrgestell 2 des autonomen mobilen Roboters 1 geschwenkt und schließlich wieder so weit abgesetzt, dass die Palette 8 vollständig auf der Ladefläche 3 aufsitzt und abgestellt ist. Alternativ kann gegebenenfalls auch darauf verzichtet werden, einen von der Ladungsträgeraufnahmeeinrichtung aufgenommenen Ladungsträger 8 auf der Ladefläche 3 abzusetzen, wobei der Ladungsträger 8 dann von der Ladungsträgeraufnahmeeinrichtung in zentraler Position in geringem Abstand vollständig über der Ladefläche 3 schwebend gehalten wird. Beim Schwenken bzw. Drehen der schwenkbaren bzw. drehbaren Arme 6, 6' der Ladungsträgeraufnahmeeinrichtung um ihre gemeinsame Armdrehachse 9 wird ein von der Ladungsträgeraufnahmeeinrichtung aufgenommener Ladungsträger 8 dabei vorzugsweise weitgehend in einer vornehmlich horizontalen Ausrichtung getragen, weshalb die beiden schwenkbaren Arme 6, 6' als Gelenkarme ausgebildet sind. Die Greifeinrichtung 7" kann daher starr mit den freien Enden der schwenkbaren Arme 6, 6' verbunden sein. Bei dem Übergang der Palette 8 von dem aufnahmeseitigen/abstellseitigen Operationsbereich in den transportseitigen Operationsbereich (und ebenso umgekehrt) werden die Greifeinrichtung 7" und die zweiten Armsegmente 17, 17' zwischen den ersten beiden Armsegmenten 16, 16' hindurch geführt. Die freien Enden der ersten beiden Armsegmente 16, 16', in deren Umgebung sich drehbar um die Drehgelenkdrehachse 12 die zweiten Armsegmente 17, 17' an die erste Armsegmente 16, 16' anschließen, passieren dabei jeweils und zugleich den höchsten Punkt über der Fahrgestellebene.

In der Darstellung des autonomen mobilen Roboters 1 gemäß Figur 5 ist die Palette 8 auf der Ladefläche 3 abgestellt. Die Greifeinrichtung 7" der Ladungsträgeraufnahmeeinrichtung ist ebenfalls auf der Ladefläche 2 abgestellt, wobei die Tragelemente 11" zwar noch vollständig mit dem jeweiligen stirnseitigen Freiräumen der Palette 8 in Eingriff sind, jedoch kein Kontakt mehr zwischen den Oberseiten der Tragelemente 11" und einer Unterseite der Palette 8 besteht, die Greifeinrichtung 7" die Palette 8 also nicht (mehr) trägt. Hier zeigt sich der besondere Vorteil eines erfindungsgemäßen autonomen mobilen Roboters 1: Auch ohne das ein oder mehrere Ladungsträger 8 dabei im Spiel wären, kann die Greifeinrichtung 7 auf der Ladefläche 3 des autonomen mobilen Roboters 1 abgesetzt bzw. abgestellt oder zumindest in einer Position vollständig über der Ladefläche 3 (oder allgemeiner vollständig über dem Fahrgestell 2) schwebend positioniert sein. Die Ladungsträgeraufnahmeeinrichtung ist damit gewissermaßen in einer Ruhe- oder Nichtgebrauchsposition. Die Tragelemente 11" ("Gabeln") der ähnlich eines Gabelträgers ausgebildeten Greifeinrichtung 7" der Ladungsträgeraufnahmeeinrichtung des autonomen mobilen Roboters 1 stehen dann nicht über das Fahrgestell 2 über und das Gefahrenpotential der Tragelemente/Gabeln 11 ist deutlich verringert. Grundsätzlich kann bei jeder erfindungsgemäßen Ausgestaltung eines autonomen mobilen Roboters 1, d. h., auch wenn die Greifeinrichtung(en) 7, 7' der Ladungsträgeraufnahmeeinrichtung nicht ähnlich einem Gabelträger oder dergleichen ausgebildet sind, in eine entsprechende Ruhe- oder Nichtgebrauchsposition auf dem Fahrgestell 2/auf der Ladefläche 3 oder zumindest in zentraler Position in geringem Abstand vollständig über dem Fahrgestell 2lüber der Ladefläche 3 schwebend gebracht werden.

### Bezugszeichenliste

- 1: Autonomer mobiler Roboter
- 2: Fahrgestell
- 3: Ladefläche
- 4: Rollen
- 5, 5`: Armhalterung
- 6, 6': Schwenkbarer Arm
- 7, 7', 7": Greifeinrichtung
- 8: Ladungsträger
- 9: Armdrehachse
- 10: Greifeinrichtungsdrehachse
- 11, 11', 11": Tragelement
- 12: Drehgelenkdrehachse
- 13: Ladungs-/Transportaufbau
- 14: Querträger
- 15, 15': Seitenträger
- 16, 16': Erstes Armsegment
- 17, 17': Zweites Armsegment

## Patentansprüche

1. Autonomer mobiler Roboter (1) ausgebildet zum Aufnehmen, Abstellen und Transportieren von Ladungsträgern (8), umfassend wenigstens ein Fahrgestell (2) von zumindest näherungsweise rechteckförmiger Basisgestalt mit einer Vorzugslängsachse und einer Vorzugsquerachse, wobei die Vorzugslängsachse und die Vorzugsquerachse eine Fahrgestellebene aufspannen, mit einem Fahrwerk, einem Antrieb, einer Steuerung und mit wenigstens einer Ladungsträgeraufnahmeeinrichtung, die zum Greifen wenigstens eines Ladungsträgers (8), zum Anheben des Ladungsträgers (8) von einem Boden und/oder zum Absenken bzw. zum Abstellen des Ladungsträgers (8) auf einem Boden in einem Bereich und/oder an einer Stelle in der Umgebung des Fahrgestells (2) sowie zum Tragen des wenigstens einen Ladungsträgers (8) in einer Position vollständig über dem Fahrgestell (2) und/oder zum Abstellen des wenigstens einen Ladungsträgers (8) auf dem Fahrgestell (2) und/oder zum Anheben des wenigstens eines Ladungsträgers (8) vom Fahrgestell (2) ausgebildet ist, wobei die Ladungsträgeraufnahmeeinrichtung zwei, in bezüglich des Fahrgestells (2) gegenüberliegenden längsseitigen Bereichen in einer Umgebung eines der beiden längsseitigen Enden des Fahrgestells (2) angeordnete, wenigstens in einer Ebene senkrecht zu der Fahrgestellebene um eine zu der Vorzugsquerachse parallele Armdrehachse (9) schwenkbare bzw. drehbare Arme (6, 6') umfasst, wobei nach Aufnehmen eines Ladungsträgers (8) an einer Aufnahmeposition zum Verbringen des Ladungsträgers (8) in eine Position vollständig über dem Fahrgestell (2) und/oder zum Verbringen eines Ladungsträgers (8) aus einer Position vollständig über dem Fahrgestell (2) in eine Abstellposition mittels der Ladungsträgeraufnahmeeinrichtung der Ladungsträger (8) durch eine Vertikalebene, die senkrecht zu der Fahrgestellebene ausgerichtet ist und wobei die Armdrehachse (9) in dieser Vertikalebene verläuft, vollständig hindurchtritt, und wobei jeder schwenkbare Arm (6, 6') eine im Bereich seines jeweiligen freien Endes angeordnete Greifeinrichtung (7, 7') zum Greifen zumindest eines Ladungsträgers (8) aufweist oder die schwenkbaren Arme (6, 6') eine im Bereich ihrer jeweiligen freien Enden angeordnete gemeinsame Greifeinrichtung (7") zum Greifen zumindest eines Ladungsträgers (8) aufweisen, **dadurch gekennzeichnet, dass** die Ladungsträgeraufnahmeeinrichtung zum stirnseitigen Greifen des Ladungsträgers (8) ausgebildet ist, dass die Greifeinrichtung (7") ein oder mehrere Tragelemente (11") aufweist, die in einem stirnseitigen Freiraum und/oder in stirnseitigen Freiräumen in einem Ladungsträger (8) mit dem Ladungsträger (8) zum Aufnehmen des Ladungsträgers (8) in Eingriff bringbar und zum Abstellen und Freigeben eines Ladungsträgers (8) mit einem stirnseitigen Freiraum und/oder stirnseitigen Freiräumen in dem Ladungsträger (8) außer Eingriff bringbar sind, wobei die Tragelemente (11") in einer Aufnahmepose zur Aufnahme eines Ladungsträgers (8) von einem Boden oder vom Fahrgestell (2) bzw. einer Abstellpose zum Abstellen eines Ladungsträgers (8) auf einem Boden und/oder auf dem Fahrgestell (2) im Wesentlichen parallel zu einer horizontalen Ebene und/oder im Wesentlichen parallel zur Fahrgestellebene ausgerichtet oder ausrichtbar sind.

2. Autonomer mobiler Roboter nach Anspruch 1 , **dadurch gekennzeichnet, dass** die vertikale Lage der Armdrehachse (9) bezüglich der Fahrgestellebene und/oder entlang der Vorzugslängsachse zumindest ein Stück weit veränderbar ist.

3. Autonomer mobiler Roboter nach einem der Ansprüche 1 oder 2, **dadurch gekennzeichnet, dass** die schwenkbaren Arme (6, 6') mehrteilig und/oder segmentiert ausgebildet sind.

4. Autonomer mobiler Roboter nach Anspruch 3, **dadurch gekennzeichnet, dass** ein jeder der schwenkbaren Arme (6, 6') teleskopierbar ist.

5. Autonomer mobiler Roboter nach einem der Ansprüche 3 oder 4, **dadurch gekennzeichnet, dass** die schwenkbaren Arme (6, 6') als Gelenkarme ausgebildet sind.

6. Autonomer mobiler Roboter nach einem der Ansprüche 1 bis 5, **dadurch gekennzeichnet, dass** die schwenkbaren Arme (6, 6') an ihrem jeweiligen festen Ende, in dessen Umgebung die schwenkbaren Arme (6, 6') schwenkbar um die Armdrehachse (9) gelagert sind, parallel zu der Vorzugsquerachse direkt an dem Fahrgestell (2), über eine (jeweilige) am Fahrgestell (2) angeordnete Armhalterung (5, 5') und/oder über einen auf dem Fahrgestell (2) angeordneten Ladungs-/Transportaufbau (13) an dem Fahrgestell (2) fixiert sind.

## Claims

1. Autonomous mobile robot (1) configured for picking up, placing down, and transporting load carriers (8), comprising at least one chassis (2) of at least approximately rectangular base shape with a preferred longitudinal axis and a preferred transverse axis, wherein the preferred longitudinal axis and the preferred transverse axis span a chassis plane, with a running gear, a drive, a control system, and at least one load carrier receiving device that is arranged for gripping at least one load carrier (8), for lifting the load carrier (8) from a floor and/or lowering or placing the load carrier (8) onto a floor in an area and/or at a location in the vicinity of the chassis (2), as well as for carrying the at least one load carrier (8) in a position completely above the chassis (2) and/or for placing the at least one load carrier (8) onto the chassis (2) and/or for lifting the at least one load carrier (8) from the chassis (2), wherein the load carrier receiving device comprises two arms (6, 6') that are arranged in longitudinal areas that are opposite with respect to the chassis (2) in the vicinity of one of the two longitudinal ends of the chassis (2), and that are pivotable or rotatable about an arm pivot axis (9) parallel to the preferred transverse axis in at least one plane perpendicular to the chassis plane, wherein after picking up a load carrier (8) at a pickup position, the load carrier (8) is moved into a position completely above the chassis (2) and/or is moved from a position completely above the chassis (2) into a placement position by means of the load carrier receiving device, with the load carrier (8) fully passing through a vertical plane oriented perpendicular to the chassis plane, wherein the arm pivot axis (9) lies in this vertical plane, and wherein each pivotable arm (6, 6') has at its respective free end a gripping device (7, 7') for gripping at least one load carrier (8), or the pivotable arms (6, 6') have a common gripping device (7") arranged at their respective free ends for gripping at least one load carrier (8), **characterized in that** the load carrier receiving device is arranged for end-side gripping of the load carrier (8), that the gripping device (7") comprises one or more carrying elements (11") that can engage with the load carrier (8) in an end-side free space and/or end-side free spaces in the load carrier (8) to pick up the load carrier (8) and can disengage from the load carrier (8) with an end-side free space and/or end-side free spaces in the load carrier (8) to place down and release the load carrier (8), wherein the carrying elements (11") in a pickup pose for picking up a load carrier (8) from a floor or from the chassis (2) or in a placement pose for placing down a load carrier (8) on a floor and/or on the chassis (2), are aligned or can be aligned substantially parallel to a horizontal plane and/or substantially parallel to the chassis plane.

2. Autonomous mobile robot according to claim 1, **characterized in that** the vertical position of the arm pivot axis (9) relative to the chassis plane and/or along the preferred longitudinal axis is at least partially adjustable.

3. Autonomous mobile robot according to one of the claims 1 or 2, **characterized in that** the pivotable arms (6, 6') are multi-part and/or segmented.

4. Autonomous mobile robot according to claim 3, **characterized in that** each of the pivotable arms (6, 6') is telescopic.

5. Autonomous mobile robot according to one of the claims 3 or 4, **characterized in that** the pivotable arms (6, 6') are arranged as articulated arms.

6. Autonomous mobile robot according to one of the claims 1 to 5, **characterized in that** the pivotable arms (6, 6') are mounted at their respective fixed ends in the vicinity where the pivotable arms (6, 6') are pivotable about the arm pivot axis (9) parallel to the preferred transverse axis, directly on the chassis (2) via a (respective) arm holder (5, 5') arranged on the chassis (2) and/or via a load/transport structure (13) arranged on the chassis (2) and fixed to the chassis (2).

## Revendications

1. Robot (1) mobile autonome conçu pour recevoir, déposer et transporter des supports de charges (8), comprenant au moins un châssis (2) de forme de base au moins approximativement rectangulaire et comportant un axe longitudinal préférentiel et un axe transversal préférentiel, dans lequel l'axe longitudinal préférentiel et l'axe transversal préférentiel définissent un plan de châssis, comportant un mécanisme de roulement, un entraînement, une commande et comportant au moins un dispositif de réception de support de charges qui est conçu pour saisir au moins un support de charges (8), pour soulever le support de charges (8) d'un sol et/ou pour abaisser ou pour déposer le support de charges (8) sur un sol dans une zone et/ou à un endroit dans les environs du châssis (2) ainsi que pour porter l'au moins un support de charges (8) dans une position entièrement au-dessus du châssis (2) et/ou pour déposer l'au moins un support de charges (8) sur le châssis (2) et/ou pour soulever l'au moins un support de charges (8) du châssis (2), dans lequel le dispositif de réception de support de charges comprend deux bras (6, 6') disposés dans des zones longitudinales opposées par rapport au châssis (2) dans les environs de l'une des deux extrémités longitudinales du châssis (2) et pouvant pivoter ou tourner au moins dans un plan perpendiculaire au plan de châssis autour d'un axe de rotation de bras (9) parallèle à l'axe transversal préférentiel, dans lequel, après la réception d'un support de charges (8) dans une position de réception pour faire passer le support de charges (8) dans une position entièrement au-dessus du châssis (2) et/ou pour faire passer un support de charges (8) d'une position entièrement au-dessus du châssis (2) à une position de dépose au moyen du dispositif de réception de support de charges, le support de charges (8) traverse entièrement un plan vertical qui est orienté perpendiculairement au plan de châssis et dans lequel l'axe de rotation de bras (9) s'étend dans ledit plan vertical, et dans lequel chaque bras (6, 6') pouvant pivoter présente un dispositif de préhension (7, 7') disposé dans la zone de son extrémité libre respective et permettant de saisir au moins un support de charges (8) ou les bras (6, 6') pouvant pivoter présentent un dispositif de préhension (7") commun disposé dans la zone de leurs extrémités libres respectives et permettant de saisir au moins un support de charges (8), **caractérisé en ce que** le dispositif de réception de support de charges est conçu pour saisir côté frontal le support de charges (8), **en ce que** le dispositif de préhension (7") présente un ou plusieurs éléments porteurs (11") qui peuvent être amenés en prise avec le support de charges (8), dans un espace libre côté frontal et/ou dans des espaces libres côté frontal dans un support de charges (8), pour la réception du support de charges (8) et qui peuvent être amenés hors de prise avec un espace libre côté frontal et/ou des espaces libres côté frontal dans le support de charges (8) pour déposer et libérer un support de charges (8), dans lequel les éléments porteurs (11") sont orientés ou peuvent être orientés sensiblement parallèlement à un plan horizontal et/ou sensiblement parallèlement au plan de châssis dans une position de réception pour la réception d'un support de charges (8) depuis un sol ou depuis le châssis (2) ou dans une position de dépose pour déposer un support de charges (8) sur un sol et/ou sur le châssis (2).

2. Robot mobile autonome selon la revendication 1, **caractérisé en ce que** la position verticale de l'axe de rotation de bras (9) par rapport au plan de châssis et/ou le long de l'axe longitudinal préférentiel peut être modifiée au moins dans une certaine mesure.

3. Robot mobile autonome selon l'une des revendications 1 ou 2, **caractérisé en ce que** les bras (6, 6') pouvant pivoter sont conçus en plusieurs parties et/ou de manière segmentée.

4. Robot mobile autonome selon la revendication 3, **caractérisé en ce que** chacun des bras (6, 6') pouvant pivoter est télescopique.

5. Robot mobile autonome selon l'une des revendications 3 ou 4, **caractérisé en ce que** les bras (6, 6') pouvant pivoter sont conçus en tant que bras articulés.

6. Robot mobile autonome selon l'une des revendications 1 à 5, **caractérisé en ce que** les bras (6, 6') pouvant pivoter sont fixés sur le châssis (2), au niveau de leur extrémité fixe respective dans les environs de laquelle les bras (6, 6') pouvant pivoter sont montés de manière à pouvoir pivoter autour de l'axe de rotation de bras (9), parallèlement à l'axe transversal préférentiel directement sur le châssis (2), par l'intermédiaire d'un dispositif de maintien de bras (5, 5') (respectif) disposé sur le châssis (2) et/ou par l'intermédiaire d'une structure de chargement/transport (13) disposée sur le châssis (2).
